# EUROPEAN PATENT SPECIFICATION

(11) **EP 3 173 209 B1**
(45) Date of publication and mention of the grant of the patent: **18.07.2018**
(21) Application number: 16198563.5
(22) Date of filing: 14.11.2016
(51) Int. Cl.: B29C 45/77, B29C 45/50

(54) **INJECTION UNIT**
EINSPRITZEINHEIT
UNITÉ D'INJECTION

(30) Priority: 27.11.2015 JP 2015232213
(43) Date of publication of application: 31.05.2017
(73) Proprietor: SUMITOMO HEAVY INDUSTRIES, LTD., Tokyo 141-6025 (JP)
(72) Inventor: TAKEUCHI, Shigeru, Chiba-shi, Chiba 263-0001 (JP)
(74) Representative: Louis Pöhlau Lohrentz

(56) References cited:
- EP-A1- 0 752 303
- EP-A1- 1 584 444

## Description

### BACKGROUND OF THE INVENTION

### Field of the Invention

Certain embodiments of the present invention relate to an injection unit.

Priority is claimed to Japanese Patent Application No. 2015-232213, filed November 27, 2015.

### Description of Related Art

An injection molding machine disclosed in Japanese Unexamined Utility Model Registration Application No. 5-53923 includes a cylinder to which a resin is supplied, a screw which feeds the resin from the tip of the cylinder to a mold, and a load cell which detects a pressure of the resin. Multiple ball nuts are fixed to a cylinder fixing plate for fixing the cylinder at a position symmetrical to the cylinder. A ball screw is screwed to each ball nut, and a bearing of each ball screw is held by an injection screw pushing plate. The load cell is interposed between an outer ring of the bearing of any one ball screw and a step portion of a hole of the injection screw pushing plate.
An internal pressure of a resin is transmitted to the load cell via the screw, the injection screw pushing plate, or the like, and is received by the ball screw. A pulley is mounted on the end section of each ball screw, and the pulley is connected by a motor on the injection screw pushing plate and a timing belt.

European Patent Application EP 752 303 A1 discloses an injection unit in which the tip of a ball screw is mounted so as to be rotatable with respect to a pusher plate but immovable in the axial direction. A ball nut, which mates with the ball screw, is attached to a rear plate through a load cell.

In the related art, since the load cell is disposed inside the injection screw pushing plate, workability in maintenance of the load cell is poor.

### SUMMARY OF THE INVENTION

The present invention is made in consideration of the above-described circumstances, and a main object thereof is to provide an injection unit in which workability in maintenance of a load cell is improved.

In order to achieve the above-described object, according to an aspect of the present invention, there is provided an injection unit, including: a cylinder to which a molding material is supplied; a discharging member which is provided to freely move forward and backward in the cylinder and discharges the molding material outside the cylinder by a forward movement of the discharging member; a fixing member to which a rear end section of the cylinder is attached; a movable member which is provided to freely move forward and backward behind the fixing member and is connected to the discharging member; a movement conversion mechanism which converts rotation motion of a motor into linear motion of the movable member; and a load cell which is attached to both the fixing member and a portion of the movement conversion mechanism, in which the load cell is disposed in front of the fixing member.

According to the aspect of the present invention, an injection unit in which workability in maintenance of the load cell is improved is provided.

### BRIEF DESCRIPTION OF THE DRAWINGS

Fig. 1 is a view showing an injection unit according to a first embodiment.
Fig. 2 is a view showing an injection unit according to a first modification example of the first embodiment.
Fig. 3 is a view showing an injection unit according to a second modification example of the first embodiment.
Fig. 4 is a view showing an injection unit according to a second embodiment.
Fig. 5 is a view showing an injection unit according to a third embodiment.

### DETAILED DESCRIPTION OF THE INVENTION

Hereinafter, embodiments of the present invention are described with reference to the drawings. Meanwhile, in each drawing, the same or corresponding reference numerals are assigned to the same or corresponding configurations, and descriptions thereof are omitted.

### First Embodiment

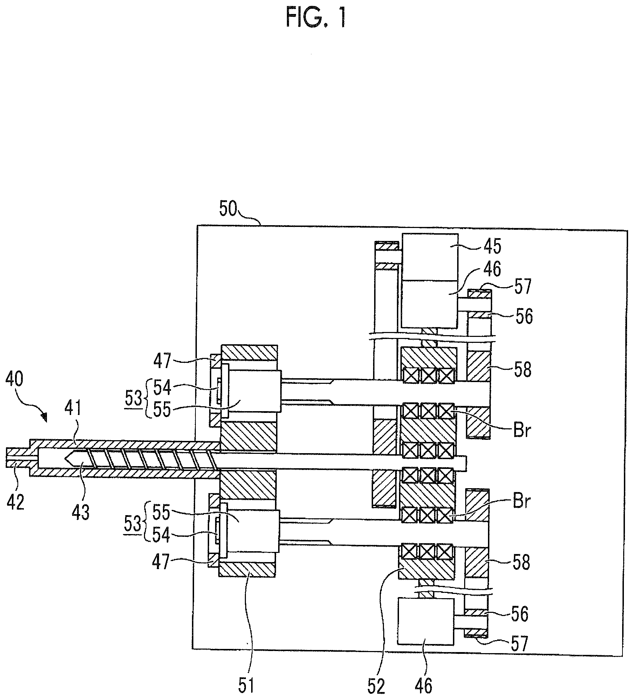

Fig. 1 is a view showing an injection unit according to a first embodiment. A movement direction (a left direction in the drawing) of a screw 43 when filling is performed is referred to as a front side, and a movement direction (a right direction in the drawing) of the screw 43 when plasticizing is performed is referred to as a rear side.

An injection unit 40 is touched to a mold unit and fills the inside of the mold unit with a molding material. For example, the injection unit 40 includes a cylinder 41, a nozzle 42, a screw 43, a plasticizing motor 45, injection motors 46, and load cells 47.

The cylinder 41 has a supply port on the outer circumference of the cylinder 41, and heat a molding material which is supplied from the supply port to the inside of the cylinder 41. The supply port is formed on the rear portion of the cylinder 41. A heat source such as a heater is provided on the outer circumference of the cylinder 41.

The nozzle 42 is provided on the front end section of the cylinder 41, and is pressed to the mold unit.

The screw 43 is disposed to be rotatable and to freely move forward and backward in the cylinder 41. The screw 43 discharges a molding material outside the cylinder 41 by the forward movement of the screw 43. The screw 43 corresponds to a discharging member described in claims.

The plasticizing motor 45 rotates the screw 43. A center line of the plasticizing motor 45 is parallel to a center line of the screw 43. Rotation motion of the plasticizing motor 45 is transmitted to the screw 43 via a drive pulley, an endless belt, a driven pulley, or the like.

In addition, in the present embodiment, the center line of the plasticizing motor 45 and the center line of the screw 43 are deviated from each other. However, the center line of the plasticizing motor 45 and the center line of the screw 43 may coincide with each other. In the latter case, the rotation motion of the plasticizing motor 45 is transmitted to the screw 43 via a coupling or the like instead of the driving pulley, the endless belt, the driven pulley, or the like.

The plasticizing motor 45 rotates the screw 43, and feeds the molding material to the front side along spiral grooves of the screw 43. The molding material is gradually melted by heat from the cylinder 41 while being fed to the front side. A liquid molding material is fed to the front of the screw 43 and is accumulated in front of the cylinder 41, and the screw 43 is moved backward.

Each of the injection motors 46 moves the screw 43 forward and backward. A movement conversion mechanism 53 which converts rotation motion of the injection motor 46 into linear motion of the screw 43 is provided between the screw 43 and the injection motor 46. The movement conversion mechanism 53 will be described below.

The injection motor 46 moves the screw 43 forward and injects the liquid molding material accumulated in front of the screw 43 from the cylinder 41, and the inside of the mold unit is filled with the liquid molding material. Thereafter, the injection motor 46 presses the screw 43 forward, and applies a pressure to the molding material inside the mold unit. Accordingly, insufficient molding materials can be replenished.

The load cell 47 detects a pressure which is applied from the molding material to the screw 43, a backpressure with respect to the screw 43, or the like. The pressure which is applied from the molding material to the screw 43 corresponds to a pressure which acts on the molding material from the screw 43. The load cell 47 sends a signal indicating the detection results to a controller.

The operation of the injection unit 40 is controlled by a controller. The controller is configured of a computer or the like. The controller controls a filling process, a holding pressure process, a plasticizing process, or the like.

In the filling process, the injection motor 46 is driven so as to move the screw 43 forward at a setting speed, and the inside of the mold unit is filled with the liquid molding material accumulated in front of the screw 43.
If the position of the screw 43 reaches a predetermined position, switching from the filling process to the holding pressure process (so called V/P switching) is performed. The setting speed of the screw 43 may be changed according to the position of the screw 43, time, or the like.

In addition, in the filing process, after the position of the screw 43 reaches a predetermined position, the screw 43 may temporarily stop at the predetermined position, and thereafter, the V/P switching may be performed. Immediately before the V/P switching, instead of stopping the screw 43, the screw 43 may move forward or may move backward at a very slow speed.

In the holding pressure process, the injection motor 46 is driven so as to press the screw 43 forward at a setting pressure, and a pressure is applied to the molding material inside the mold unit. Insufficient molding materials can be replenished. For example, the pressure of the molding material is detected by the load cell 47.

After the holding pressure process, a cooling process starts. In the cooling process, solidification of the molding material inside the mold unit is performed. In order to shorten a molding cycle, the plasticizing process may be performed during the cooling process.

In the plasticizing process, the plasticizing motor 45 is driven so as to rotate the screw 43 at a setting rotating speed, and the screw 43 feeds the molding material forward along the spiral grooves of the screw 43. According to this, the molding material is gradually melted. The liquid molding material is fed to the front of the screw 43 and is accumulated in front of the cylinder 41, and the screw 43 moves backward.

In the plasticizing process, in order to restrict an abrupt backward movement of the screw 43, the injection motor 46 may be driven so as to apply a setting backpressure to the screw 43. For example, the backpressure with respect to the screw 43 is detected by the load cell 47. If the screw 43 moves backward to the predetermined position and a predetermined amount of the molding materials is accumulated in front of the screw 43, the plasticizing process ends.

The injection unit 40 further includes a fixing member 51, a movable member 52, a movement conversion mechanism 53, or the like. The rear end section of the cylinder 41 is attached to the fixing member 51. The fixing member 51 is fixed to a base 50. The movable member 52 is disposed to freely move forward and backward behind the fixing member 51. A guide which guides the movable member 52 in forward and backward directions may be provided. The guide may be suspended between a support member which is disposed behind the movable member 52 and the fixing member 51, or may be placed on the base 50. The movable member 52 is connected to the screw 43. The movement conversion mechanism 53 converts the rotation motion of the injection motor 46 to the linear motion of the movable member 52. The movable member 52 performs the linear motion and moves the screw 43 forward and backward.

For example, the movement conversion mechanism 53 includes a ball screw shaft 54, and a ball screw nut 55 which is screwed to the ball screw shaft 54. The ball screw shaft 54 is rotatably supported by a bearing Br which is held by the movable member 52. Meanwhile, for example, the ball screw nut 55 is fixed to the fixing member 51 via the load cell 47.

The center line of the movement conversion mechanism 53 is parallel to the center line of the injection motor 46. The rotation motion of the injection motor 46 is transmitted to the ball screw shaft 54 via a drive pulley 56, an endless belt 57, and a driven pulley 58. The drive pulley 56 is fixed to the output shaft of the injection motor 46, the endless belt 57 is suspended between the drive pulley 56 and the driven pulley 58, and the driven pulley 58 is fixed to the ball screw shaft 54.

In addition, in the present embodiment, the center line of the movement conversion mechanism 53 is deviated from the center line of the injection motor 46. However, the center line of the movement conversion mechanism 53 may coincide with the center line of the injection motor 46. In the latter case, the rotation motion of the injection motor 46 is transmitted to the ball screw shaft 54 via a coupling or the like instead of the drive pulley 56, the endless belt 57, the driven pulley 58, or the like.

The injection motor 46 may be attached to the movable member 52. If the injection motor 46 is driven, the ball screw shaft 54 moves forward and backward while being rotated, and the movable member 52 which holds the bearing Br of the ball screw shaft 54 or the screw 43 which is connected to the movable member 52 moves forward and backward.

Multiple movement conversion mechanisms 53 are symmetrically provided with the center line of the screw 43 as a center. The injection motor 46 is provided for each movement conversion mechanism 53, and multiple injection motors 46 are synchronically controlled. The multiple injection motors 46 are simultaneously driven, the multiple ball screw shafts 54 move forward and backward while being simultaneously rotated, and the movable member 52 or the screw 43 moves forward and backward.

The load cell 47 is attached to both a portion (the ball screw nut 55 in the present embodiment) of the movement conversion mechanism 53 and the fixing member 51. For example, the load cell 47 is formed in a ring shape, the inner circumferential portion of the load cell 47 is attached to the ball screw nut 55, and the outer circumferential portion of the load cell 47 is attached to the fixing member 51.

The multiple ball screw nuts 55 are fixed to the fixing member 51 via respective load cells 47. In addition, only one ball screw nut 55 may be fixed to the fixing member 51 via the load cell 47. Other ball screw nuts 55 may be fixed to the fixing member 51 via spacers, and may be directly fixed to the fixing member 51.

The load cell 47 detects a force which acts on the load cell 47. For example, a force acts on the load cell 47 from the molding material via the screw 43, the movable member 52, the bearing Br, the movement conversion mechanism 53, or the like. As the load cell 47, a strain gauge-type load cell, an electrostatic capacitance type load cell, a magnetostrictive type load cell, or the like can be used.

The load cell 47 is disposed in front of the fixing member 51. Accordingly, replacement of the load cell 47 is easily performed, and it is possible to improve workability in the maintenance of the load cell 47. For example, unlike the related art, the operation which is required in the case where the load cell 47 is provided inside the hole of the movable member 52, for example, the operations such as separation between the movable member 52 and the bearing Br or separation between the ball screw shaft 54 and the driven pulley 58 are not required. In addition, the operation which is required in a case where the load cell 47 is provided behind the fixing member 51, for example, the operation which moves the movable member 52 for extracting the ball screw shaft 54 from the load cell 47 backward, or the like is not required. In addition, compared to the case where the load cell 47 is provided inside the hole of the movable member 52 in the related art, it is possible to simplify the movable member 52 and the structures around the movable member 52 and to decrease the manufacturing cost. Moreover, unlike the case where the load cell 47 is provided inside the hole of the movable member 52 in the related art, during driving of the injection motor 46, a radial force of the driven pulley 58 does not act on the load cell 47.

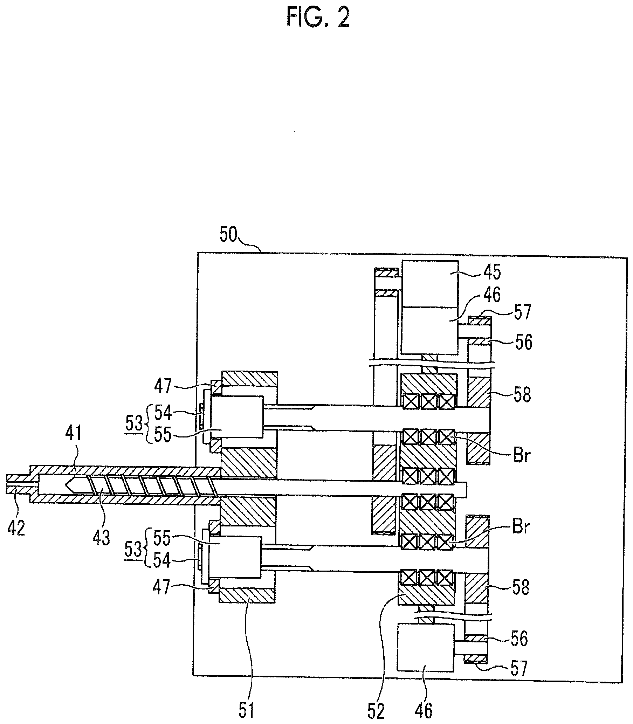

The load cell 47 may be disposed in front of the fixing member 51. As shown in Fig. 2, the load cell 47 may be disposed behind the flange section of the ball screw nut 55 and may be interposed between the flange section and the fixing member 51. However, as shown in Fig. 1, the load cell 47 may be disposed in front of both the fixing member 51 and the ball screw nut 55. The load cell 47 may be removed without removing the ball screw nut 55 from the ball screw shaft 54.

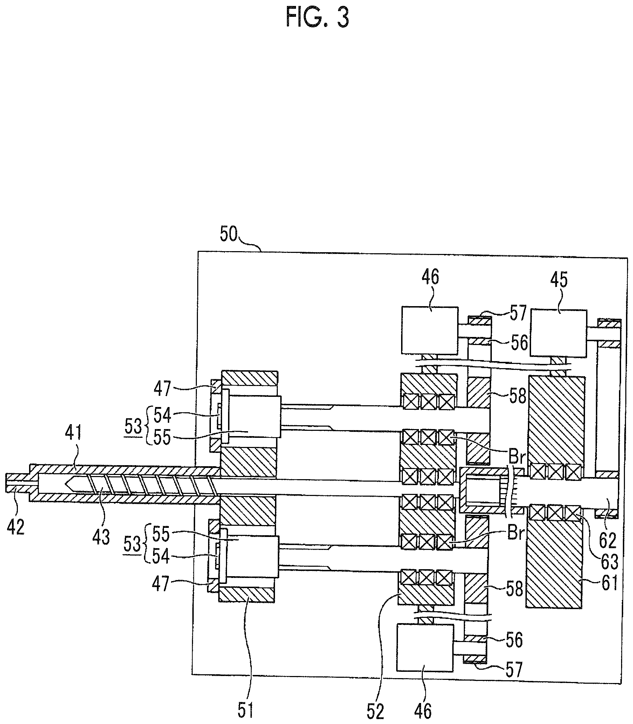

In addition, as shown in Fig. 1 or 2, the plasticizing motor 45 is attached to the movable member 52. However, as shown in Fig. 3, the plasticizing motor 45 may be fixed to the base 50. In this case, a support member 61 may be provided behind the movable member 52. The support member 61 is fixed to the base 50 and holds a bearing 63 which rotatably supports the rotary shaft 62.

The center line of the plasticizing motor 45 is parallel to the center line of the rotary shaft 62. The rotation motion of the plasticizing motor 45 is transmitted to the rotary shaft 62 via the pulley, the belt, or the like. In addition, the center line of the plasticizing motor 45 may coincide with the center line of the rotary shaft 62. The center lines of the plasticizing motor 45 and the rotary shaft 62 may be parallel to each other and may coincide with each other as long as the rotation motion of the plasticizing motor 45 is transmitted to the rotary shaft 62.

The rotary shaft 62 is spline-connected to the screw 43 which moves along with the movable member 52, and the rotation motion of the plasticizing motor 45 is transmitted to the screw 43. The linear motion of the screw 43 is not transmitted to the rotary shaft 62.

### Second Embodiment

The movement conversion mechanism 53 of the first embodiment includes the ball screw shaft 54 and the ball screw nut 55. The ball screw shaft 54 is rotatably supported by the bearing Br which is held by the movable member 52, and the ball screw nut 55 is fixed to the fixing member 51 via the load cell 47. The injection motor 46 is attached to the movable member 52.

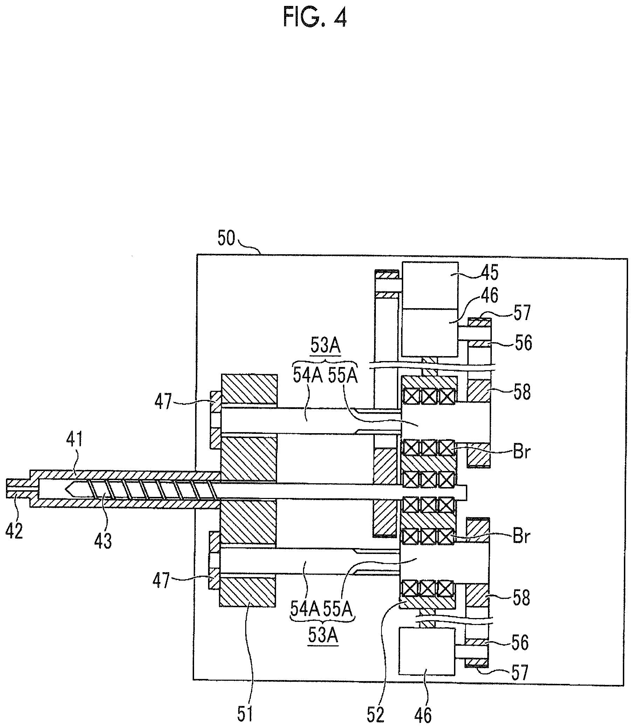

Meanwhile, as shown in Fig. 4, a movement conversion mechanism 53A of the present embodiment includes a ball screw shaft 54A and a ball screw nut 55A. The ball screw nut 55A is rotatably supported by the bearing Br which is held by the movable member 52, and the ball screw shaft 54A is fixed to the fixing member 51 via the load cell 47.

The center line of the movement conversion mechanism 53A is parallel to the center line of the injection motor 46. The rotation motion of the injection motor 46 is transmitted to the ball screw nut 55A via the drive pulley 56, the endless belt 57, and the driven pulley 58. The drive pulley 56 is fixed to the output shaft of the injection motor 46, the endless belt 57 is suspended between the drive pulley 56 and the driven pulley 58, and the driven pulley 58 is fixed to the ball screw nut 55A.

In addition, in the present embodiment, the center line of the movement conversion mechanism 53A and the center line of the injection motor 46 may be deviated from each other and may coincide with each other. In the latter case, the rotation motion of the injection motor 46 is transmitted to the ball screw nut 55A via a coupling or the like instead of the drive pulley 56, the endless belt 57, and the driven pulley 58.

The injection motor 46 is attached to the movable member 52. If the injection motor 46 is driven, the ball screw nut 55A moves forward and backward while being rotated, and the movable member 52 which holds the bearing Br of the ball screw nut 55A or the screw 43 which is connected to the movable member 52 moves forward and backward.

Multiple movement conversion mechanisms 53A are symmetrically provided with the center line of the screw 43 as a center. The injection motor 46 is provided for each movement conversion mechanism 53A, and multiple injection motors 46 are synchronically controlled. The multiple injection motors 46 are simultaneously driven, the multiple ball screw nuts 55A move forward and backward while being simultaneously rotated, and the movable member 52 or the screw 43 moves forward and backward.

The load cell 47 is attached to both a portion (the ball screw shaft 54A in the present embodiment) of the movement conversion mechanism 53A and the fixing member 51. For example, the load cell 47 is formed in a ring shape, the inner circumferential portion of the load cell 47 is attached to the ball screw shaft 54A, and the outer circumferential portion of the load cell 47 is attached to the fixing member 51.

The multiple ball screw shafts 54A are fixed to the fixing member 51 via respective load cells 47. In addition, only one ball screw shaft 54A may be fixed to the fixing member 51 via the load cell 47. Other ball screw shafts 54A may be fixed to the fixing member 51 via spacers, and may be directly fixed to the fixing member 51.

The load cell 47 detects a force which acts on the load cell 47. For example, a force acts on the load cell 47 from the molding material via the screw 43, the movable member 52, the bearing Br, the movement conversion mechanism 53A, or the like. As the load cell 47, a strain gauge-type load cell, an electrostatic capacitance type load cell, a magnetostrictive type load cell, or the like can be used.

The load cell 47 is disposed in front of the fixing member 51. Accordingly, similarly to the first embodiment, replacement of the load cell 47 is easily performed, and it is possible to improve workability in the maintenance of the load cell 47. In addition, it is possible to simplify the movable member 52 and the structures around the movable member 52 and to decrease the manufacturing cost. Moreover, during driving of the injection motor 46, a radial force of the driven pulley 58 does not act on the load cell 47.

The load cell 47 may be disposed in front of the fixing member 51. A flange section (not shown) is provided on the front end section of the ball screw shaft 54A and the load cell 47 is interposed between the flange section and the fixing member 51. However, as shown in Fig. 4, the load cell 47 may be disposed in front of both the fixing member 51 and the ball screw shaft 54A. The load cell 47 may be removed without removing the ball screw shaft 54A from the ball screw nut 55A.

### Third Embodiment

The injection unit 40 of the first embodiment is an inline-screw type injection unit.

Meanwhile, the injection unit of the present embodiment is a preplasticizing type injection unit. The preplasticizing type injection unit supplies a molding material which is melted inside a plasticizing cylinder to an injection cylinder and injects the molding material from the injection cylinder to the mold unit. A screw is rotatably is disposed or is disposed to be rotatable and to freely move forward and backward inside the plasticizing cylinder, and a plunger is disposed to freely move forward and backward in the injection cylinder.

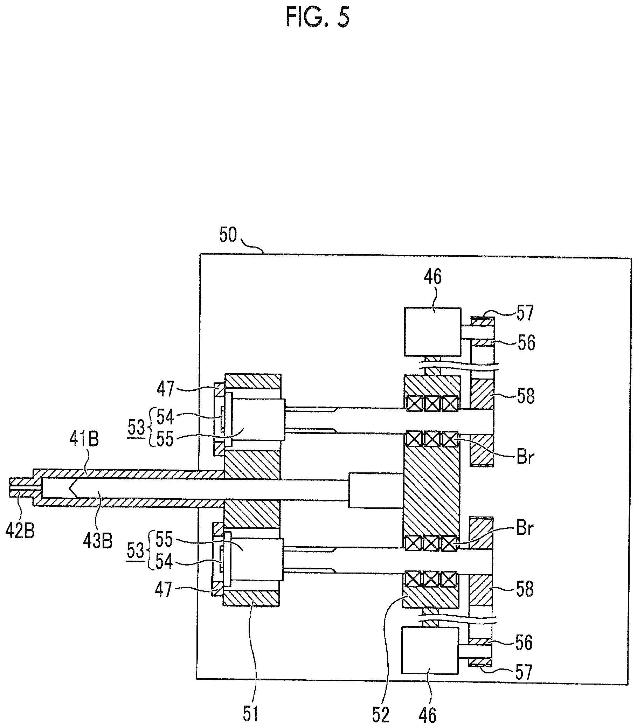

Fig. 5 is a view showing a main portion of the injection unit according to the third embodiment. An injection cylinder 41B shown in Fig. 5 is used instead of the cylinder 41 shown in Fig. 1, and a plunger 43B shown in Fig. 5 is used instead of the screw 43 shown in Fig. 1. In the present embodiment, the injection cylinder 41B corresponds to a cylinder disclosed in claims, and the plunger 43B corresponds to a discharging member disclosed in claims. Hereinafter, main differences between the first embodiment and the third embodiment will be described.

The injection cylinder 41B heats the molding material which is supplied from the plasticizing cylinder. A heat source such as a heater is provided on the outer circumference of the injection cylinder 41B. The rear end section of the injection cylinder 41B is attached to the fixing member 51.

An injection nozzle 42B is provided on the front end section of the injection cylinder 41B and is pressed to the mold unit.

The plunger 43B is disposed to freely move forward and backward in the injection cylinder 41B. The plunger 43B is connected to the movable member 52. If the movable member 52 moves forward and backward, and the plunger 43B moves forward and backward.

The injection motor 46 moves the movable member 52 forward and backward, and the plunger 43B moves forward and backward. The movement conversion mechanism 53 which converts the rotation motion of the injection motor 46 to the linear motion of the movable member 52 is provided between the injection motor 46 and the movable member 52. The center line of the movement conversion mechanism 53 and the center line of the injection motor 46 may be parallel to each other, may be deviated from each other, and may coincide with each other.

Multiple movement conversion mechanisms 53 are symmetrically provided with the center line of the plunger 43B as a center. The injection motor 46 is provided for each movement conversion mechanism 53, and multiple injection motors 46 are synchronically controlled. The multiple injection motors 46 are simultaneously driven, the multiple ball screw shafts 54 move forward and backward while being simultaneously rotated, and the movable member 52 or the plunger 43B moves forward and backward.

The load cell 47 detects a pressure which is applied from the molding material to the plunger 43B, a backpressure with respect to the plunger 43B, or the like. The pressure which is applied from the molding material to the plunger 43B corresponds to a pressure which acts on the molding material from the plunger 43B. The load cell 47 sends a signal indicating the detection results to the controller.

The load cell 47 is attached to both a portion (the ball screw nut 55 in the present embodiment) of the movement conversion mechanism 53 and the fixing member 51. Similarly to the first embodiment, the load cell 47 is disposed in front of the fixing member 51. Accordingly, replacement of the load cell 47 is easily performed, and it is possible to improve workability in the maintenance of the load cell 47. In addition, it is possible to simplify the movable member 52 and the structures around the movable member 52 and to decrease the manufacturing cost. Moreover, during driving of the injection motor 46, a radial force of the driven pulley 58 does not act on the load cell 47.

The load cell 47 may be disposed in front of the fixing member 51. As shown in Fig. 2, the load cell 47 is disposed behind the flange section of the ball screw nut 55 and is interposed between the flange section and the fixing member 51. However, as shown in Fig. 5, the load cell 47 may be disposed in front of both the fixing member 51 and the ball screw nut 55. The load cell 47 may be removed without removing the ball screw nut 55 from the ball screw shaft 54.

Moreover, in the present embodiment, the movement conversion mechanism 53 of the first embodiment is used. However, the movement conversion mechanism 53A of the second embodiment maybe used. As shown in Fig. 4, the movement conversion mechanism 53A includes the ball screw shaft 54A and the ball screw nut 55A. The ball screw nut 55A is rotatably is supported by the bearing Br which is held by the movable member 52, and the ball screw shaft 54A is fixed to the fixing member 51 via the load cell 47.

In addition, in the case where the injection unit is the preplasticizing type injection unit, the cylinder 41 shown in Figs. 1 to 4 may be used as the plasticizing cylinder, and the injection motor 46 shown in Figs. 1 to 4 may be used as the plasticizing motor. In this case, the screw 43 which is disposed to be ratable and to freely move forward and backward inside the plasticizing cylinder corresponds to a discharging member disclosed in claims. The plasticizing motor moves the movable member 52 forward and backward and moves the screw 43 forward and backward.

Hereinbefore, the embodiments or the like of the injection unit is described. However, the present invention is not limited to the above-described embodiments or the like. Various modifications and improvement may be applied to the present invention within the scope which does not depart from the gist of the present invention described in claims.

## Claims

1. An injection unit (40), comprising:
a cylinder (41) to which a molding material is supplied;
a discharging member (43) which is provided to freely move forward and backward in the cylinder (41) and discharges the molding material outside the cylinder (41) by a forward movement of the discharging member (43);
a fixing member (51) to which a rear end section of the cylinder (41) is attached;
a movable member (52) which is provided to freely move forward and backward behind the fixing member (51) and is connected to the discharging member (43);
a movement conversion mechanism (53) which converts rotation motion of a motor (46) into linear motion of the movable member (52); and
a load cell (47);
**characterized in that**
the load cell (47) is attached to both the fixing member (51) and a portion of the movement conversion mechanism (53), and
the load cell (47) is disposed on the front side of the fixing member (51) which front side is in the forward movement direction of the discharging member (43).

2. The injection unit (40) according to claim 1,
wherein the movement conversion mechanism (53) includes a ball screw shaft (54) and a ball screw nut (55) which is screwed to the ball screw shaft.

3. The injection unit (40) according to claim 2,
wherein the ball screw nut (55)is fixed to the fixing member (51) via the load cell (47).

4. The injection unit (40) according to claim 2 or 3,
wherein the load cell (47) is disposed on the front sides of both the fixing member (51) and the ball screw nut (55).

5. The injection unit (40) according to claim 2,
wherein the ball screw shaft (54)is fixed to the fixing member (51) via the load cell (47).

6. The injection unit (40) according to claim 2 or 5,
wherein the load cell (47) is disposed on the front sides of both the fixing member (51) and the ball screw shaft (54).

## Patentansprüche

1. Einspritzeinheit (40), umfassend:
einen Zylinder (41), dem ein Gießwerkstoff zugeführt wird,
ein Ausstoßbauteil (43), das so angeordnet ist, dass es sich in dem Zylinder (41) frei vorwärts und nach hinten bewegen kann und das den Gießwerkstoff durch eine Vorwärtsbewegung des Ausstoßbauteils (43) nach außerhalb des Zylinders (41) ausstößt,
ein Befestigungsbauteil (51), an dem ein hinterer Endabschnitt des Zylinders (41) befestigt ist,
ein bewegliches Bauteil (52), das so angeordnet ist, dass es sich hinter dem Befestigungsbauteil (51) frei vorwärts und nach hinten bewegen kann, und das mit dem Ausstoßbauteil (43) verbunden ist,
ein Bewegungs-Umwandlungsmechanismus (53), der eine Drehbewegung eines Motors (46) in eine lineare Bewegung des beweglichen Bauteils (52) umwandelt, und
eine Kraftmessdose (47),
**dadurch gekennzeichnet, dass**
die Kraftmessdose (47) sowohl an dem Befestigungsbauteil (51) und einem Abschnitt des Bewegungs-Umwandlungsmechanismus (53) befestigt ist und dass
die Kraftmessdose (47) an der Vorderseite des Befestigungsbauteils (51) angeordnet ist, wobei die Vorderseite in Richtung der Vorwärtsbewegung des Ausstoßbauteils (43) liegt.

2. Einspritzeinheit (40) nach Anspruch 1,
wobei der Bewegungs-Umwandlungsmechanismus (53) eine Kugelumlaufspindel (54) und eine Spindelmutter (55) umfasst, die auf die Kugelumlaufspindel geschraubt ist.

3. Einspritzeinheit (40) nach Anspruch 2,
wobei die Spindelmutter (55) über die Kraftmessdose (47) an dem Befestigungsbauteil (51) befestigt ist.

4. Einspritzeinheit (40) nach Anspruch 2 oder 3,
wobei die Kraftmessdose (47) an den Vorderseiten sowohl des Befestigungsbauteils (51) als auch der Spindelmutter (55) angeordnet ist.

5. Einspritzeinheit (40) nach Anspruch 2,
wobei die Kugelumlaufspindel (54) über die Kraftmessdose (47) an dem Befestigungsbauteil (51) befestigt ist.

6. Einspritzeinheit nach Anspruch 2 oder 5,
wobei die Kraftmessdose (47) an den Vorderseiten sowohl des Befestigungsbauteils (51) als auch der Kugelumlaufspindel (54) angeordnet ist.

## Revendications

1. Unité d'injection (40) comprenant :
un cylindre (41) auquel est amené un matériau de moulage ;
un élément de décharge (43) qui est prévu pour se déplacer librement vers l'avant et vers l'arrière dans le cylindre (41) et décharge le matériau de moulage à l'extérieur du cylindre (41) par un mouvement vers l'avant de l'élément de décharge (43) ;
un élément de fixation (51) auquel est fixée une section d'extrémité arrière du cylindre (41) ;
un élément mobile (52) qui est prévu pour se déplacer librement vers l'avant et vers l'arrière derrière l'élément de fixation (51) et est raccordé à l'élément de décharge (43) ;
un mécanisme de conversion de mouvement (53) qui convertit le mouvement de rotation d'un moteur (46) en mouvement linéaire de l'élément mobile (52) ; et
une cellule de charge (47) ;
**caractérisée en ce que** :
la cellule de charge (47) est fixée à la fois à l'élément de fixation (51) et à une partie du mécanisme de conversion de mouvement (53), et
la cellule de charge (47) est disposée sur le côté avant de l'élément de fixation (51), lequel côté avant est dans la direction du mouvement vers l'avant de l'élément de décharge (43).

2. Unité d'injection (40) selon la revendication 1,
dans laquelle le mécanisme de conversion de mouvement (53) comprend une tige de vis sphérique (54) et un écrou de vis sphérique (55) qui est vissé sur la tige de vis sphérique.

3. Unité d'injection (40) selon la revendication 2,
dans laquelle l'écrou de vis sphérique (55) est fixé sur l'élément de fixation (51) via la cellule de charge (47).

4. Unité d'injection (40) selon la revendication 2 ou 3,
dans laquelle la cellule de charge (47) est disposée sur les côtés avant à la fois de l'élément de fixation (51) et de l'écrou de vis sphérique (55).

5. Unité d'injection (40) selon la revendication 2,
dans laquelle la tige de vis sphérique (54) est fixée à l'élément de fixation (51) via la cellule de charge (47).

6. Unité d'injection (40) selon la revendication 2 ou 5,
dans laquelle la cellule de charge (47) est disposée sur les côtés avant à la fois de l'élément de fixation (51) et de la tige de vis sphérique (54).
